# EUROPEAN PATENT APPLICATION

(11) **EP 4 783 120 A1**
(43) Date of publication of application: **29.07.2026**
(21) Application number: 24867889.8
(22) Date of filing: 17.07.2024
(51) Int. Cl.: G06T 17/20, G06T 19/00

(54) **IMAGE PROCESSING DEVICE, IMAGE PROCESSING METHOD, AND PROGRAM**

(30) Priority: 19.09.2023 JP 2023150880
(71) Applicant: CANON KABUSHIKI KAISHA, Ohta-ku Tokyo 146-8501 (JP)
(72) Inventor: SATO Tomokazu, Tokyo 146-8501 (JP)
(74) Representative: TBK
(86) International application number: PCT/JP2024/025578
(87) International publication number: WO 2025/062806

(57) **Abstract**

An image processing apparatus (100) obtains three-dimensional shape sequence data including one or more three-dimensional shape data items in a time series representing three-dimensional shapes of a plurality of objects; in a case where a data item of a combined shape in which three-dimensional shapes of two or more objects of the plurality of objects are combined as one three-dimensional shape is included in the one or more three-dimensional shape data items in the time series, separates the data item of the combined shape into object shape data items which are three-dimensional shape data items corresponding to the two or more respective objects to generate the object shape data items corresponding to each of the plurality of objects; and generates, for each object, object shape sequence data which is three-dimensional shape sequence data including the object shape data items in a time series for each object.

## Description

### Technical Field

The present disclosure relates to a technology for aligning three-dimensional shape data representing the shape of an object changing over time.

### Background Art

There is a technology for generating textured three-dimensional shape data based on the three-dimensional shape of an object estimated using data of a plurality of captured images obtained through imaging by a plurality of imaging apparatuses and compressing the generated textured three-dimensional shape data. For example, one method for efficiently compressing three-dimensional shape data is a method of tracking the time-series three-dimensional shape corresponding to an object as pre-processing for compression. Tracking of a three-dimensional shape is to determine reference three-dimensional shape data and perform non-rigid registration so that the three-dimensional shape corresponding to that three-dimensional shape data matches a three-dimensional shape adjacent in time (hereinafter referred to as an "adjacent three-dimensional shape").

By aligning three-dimensional shapes in a time series in this way, the three-dimensional shape of an object is aligned over time, and the topologies of three-dimensional shapes are made to be the same between adjacent three-dimensional shapes. Furthermore, by making the topologies of three-dimensional shapes the same, the motion of an object may be expressed by moving each vertex that constitutes the three-dimensional shape. In addition, expressing three-dimensional shape data using information indicating the motion of an object, that is, the movement of its vertices and further compressing that information may efficiently reduce the data amount of the three-dimensional shape data.

Incidentally, in a scene where many objects are present at the same time, it is difficult to align all the generated three-dimensional shapes at once from the perspective of the processing time required for the computation. One method to avoid this is a method of assigning identification information for identifying an object to each three-dimensional shape and aligning the three-dimensional shape for each object. However, in a case where three-dimensional shapes corresponding to a plurality of objects in proximity to each other are combined and estimated as one three-dimensional shape, alignment cannot be performed with the one three-dimensional shape divided into the three-dimensional shapes corresponding to the respective objects.

Patent Literature 1 discloses a technology for treating a polygon mesh in which polygon meshes corresponding to a plurality of respective objects are combined as a polygon mesh corresponding to one object group and performing alignment in units of such polygon meshes. According to the technology disclosed in Patent Literature 1, even in a case where there are a plurality of objects in proximity to each other, the topologies of polygon meshes in a time series are made to be the same.

### Citation List

### Patent Literature

PTL 1: Japanese Patent Laid-Open No. 2020-136943

### Summary of Invention

However, in a case where a plurality of objects in proximity are represented by one polygon mesh, the technology disclosed in Patent Literature 1 treats the plurality of objects as one data item. Therefore, the technology disclosed in Patent Literature 1 has a problem in that in a case where a plurality of objects are in proximity, it is difficult for a user to process three-dimensional shape data for each object independently.

In order to solve the above problems, an image processing apparatus according to the present disclosure comprises: a shape obtaining unit configured to obtain three-dimensional shape sequence data including one or more three-dimensional shape data items in a time series representing three-dimensional shapes of a plurality of objects; a separation unit configured to, in a case where a data item of a combined shape in which three-dimensional shapes of two or more objects of the plurality of objects are combined as one three-dimensional shape is included in the one or more three-dimensional shape data items in the time series, separate the data item of the combined shape into object shape data items which are three-dimensional shape data items corresponding to the two or more respective objects to generate the object shape data items corresponding to each of the plurality of objects; and a sequence generation unit configured to generate, for each object, object shape sequence data which is three-dimensional shape sequence data including the object shape data items in a time series for each object.

According to the present disclosure, even in a case where the three-dimensional shapes of a plurality of objects are represented by one three-dimensional shape data item, it may be made easier to process three-dimensional shape data for each object independently.

Features of the present disclosure will become apparent from the following description of embodiments with reference to the attached drawings.

### Brief Description of Drawings

[Figure 1] Figure 1 is a block diagram showing an example of a hardware configuration of an image processing apparatus according to an embodiment 1.
[Figure 2] Figure 2 is a block diagram showing an example of a functional configuration of the image processing apparatus according to the embodiment 1.
[Figure 3] Figure 3 is a flowchart showing an example of a processing flow in the image processing apparatus according to the embodiment 1.
[Figure 4] Figures 4 are diagrams for illustrating an example of changes in data in processing by the image processing apparatus according to the embodiment 1.
[Figure 5] Figure 5 is a flowchart showing an example of a flow of a mesh sequence data generation process in a sequence generation unit according to the embodiment 1.
[Figure 6] Figures 6 are diagrams for illustrating a transformation path setting process in the sequence generation unit according to the embodiment 1.
[Figure 7] Figures 7 are diagrams for illustrating the transformation path setting process in the sequence generation unit according to the embodiment 1.
[Figure 8] Figure 8 is an example of a data structure of textured mesh sequence data output by a texturing unit and a data structure of compressed data output by a compression unit according to the embodiment 1.
[Figure 9] Figure 9 is a block diagram showing an example of a functional configuration of an image processing apparatus according to an embodiment 2.
[Figure 10] Figure 10 is a flowchart showing an example of a processing flow in the image processing apparatus according to the embodiment 2.
[Figure 11] Figure 11 is an example of an editing UI according to the embodiment 2.

### Description of Embodiments

The following will describe embodiments of the present disclosure with reference to the drawings. Note that the following embodiments do not limit the present disclosure, and not all of the combinations of features described in the embodiments are required for the solutions of the present disclosure. Note that the same components will be described with the same reference numeral.

### [Embodiment 1]

### <Hardware Configuration of Image Processing Apparatus>

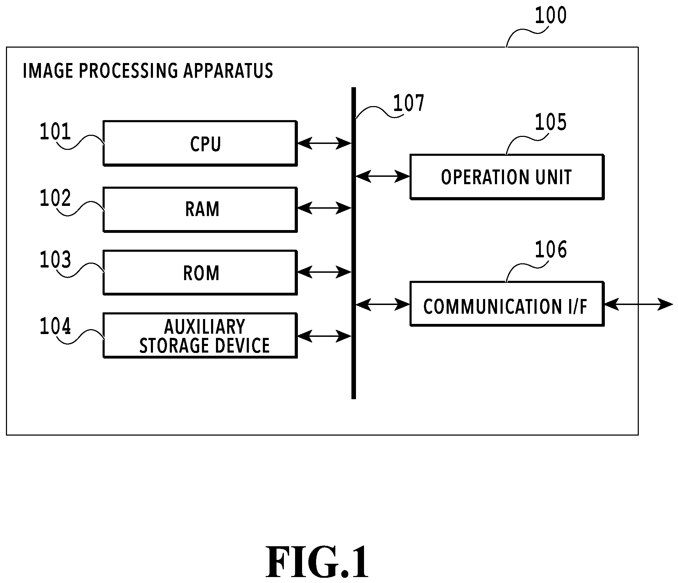

Figure 1 is a block diagram showing an example of a hardware configuration of an image processing apparatus 100 according to an embodiment 1. The image processing apparatus 100 includes an information processing apparatus, such as a personal computer, and includes a CPU 101, a ROM 102, a RAM 103, an auxiliary storage device 104, an operation unit 105, a communication I/F 106, and a bus 107. The CPU 101 implements each function of the image processing apparatus 100 by controlling the entire image processing apparatus 100 using computer programs and data stored in the ROM 102, the auxiliary storage device 104, or the like. Note that in the image processing apparatus 100, the CPU 101 may include at least either of one or more pieces of dedicated hardware and a GPU (Graphics Processing Unit), and at least part of the processing by the CPU 101 may be performed by the GPU or the dedicated hardware. Examples of dedicated hardware include an ASIC (application-specific integrated circuit), an FPGA (field-programmable gate array), and a DSP (digital signal processor).

The ROM 102 stores programs that need not be changed. The RAM 103 works as a work area for the CPU 101, and temporarily stores programs and data supplied from the auxiliary storage device 104, data supplied from the outside via the communication I/F 107, and the like. The auxiliary storage device 104 includes a hard disk drive or the like, and stores various types of data such as input image data. The operation unit 105 includes a keyboard, a mouse, or the like, and outputs various instructions to the CPU 101 in response to receiving operations from a user. The CPU 101 operates as an operation control unit that controls the operation unit 105. The communication I/F 106 is used to communicate with apparatuses external to the image processing apparatus 100. For example, in a case where the image processing apparatus 100 is connected to an external apparatus by wire, a communication cable is connected to the communication I/F 106. In a case where the image processing apparatus 100 has a function to wirelessly communicate with external apparatuses, the communication I/F 106 includes an antenna. The bus 107 connects the units included in the image processing apparatus 100 as a hardware configuration, and communicates information.

### <Functional Configuration of Image Processing Apparatus>

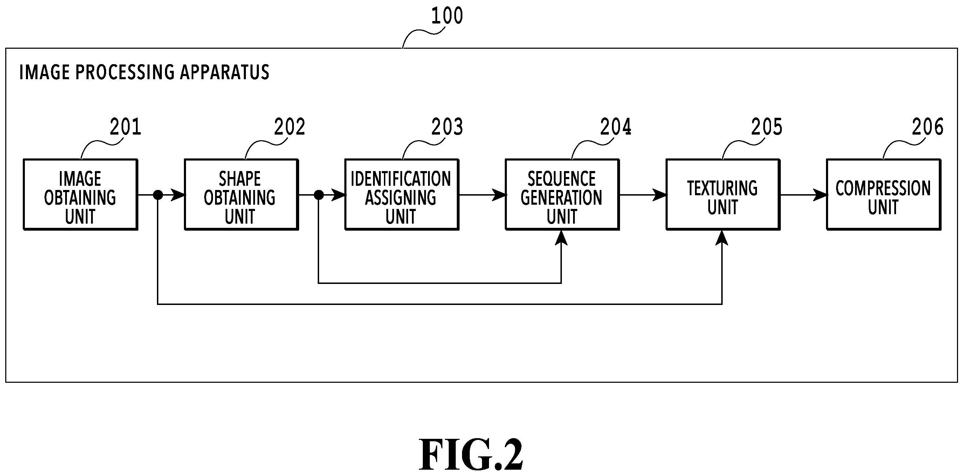

Figure 2 is a block diagram showing an example of a functional configuration of the image processing apparatus 100 according to the embodiment 1. The image processing apparatus 100 includes an image obtaining unit 201, a shape obtaining unit 202, an identification assigning unit 203, a sequence generation unit 204, a texturing unit 205, and a compression unit 206 as a functional configuration. Each unit included in the image processing apparatus 100 as a functional configuration is implemented by the CPU 101 reading a predetermined program from the ROM 102, the auxiliary storage device 104, or the like, deploying it to the RAM 103, and executing it. The image obtaining unit 201 obtains data (hereinafter referred to as "multi-viewpoint image data") of a plurality of captured images (hereinafter referred to as a "multi-viewpoint image") obtained through image capturing by a plurality of imaging apparatuses. Here, each of a plurality of pieces of captured image data that constitute the multi-viewpoint image data is moving image data composed of a plurality of pieces of frame data, and frame data is obtained through synchronized imaging by the plurality of imaging apparatuses.

The shape obtaining unit 202 estimates the three-dimensional shape of an object based on the multi-viewpoint image data obtained by the image obtaining unit 201, and obtains three-dimensional shape data representing the three-dimensional shape. Here, the three-dimensional shape data obtained by the shape obtaining unit 202 is three-dimensional shape sequence data composed of three-dimensional shape data in a time series that is based on the frame data in each piece of captured image data obtained through synchronized imaging by the plurality of imaging apparatuses. The following will provide a description assuming that there are a plurality of objects in an imaging target area of the plurality of imaging apparatuses. The identification assigning unit 203 assigns an object number corresponding to each object to the three-dimensional shape sequence data obtained by the shape obtaining unit 202 as identification information. The sequence generation unit 204 generates mesh sequence data, which is data of polygon meshes in a time series that is independent for each object, based on the three-dimensional shape sequence data obtained by the shape obtaining unit 202 and the identification information assigned by the identification assigning unit 203. In the following description, a polygon mesh will be referred to as a mesh, and data of a mesh will be referred to as mesh data.

The texturing unit 205 assigns textures to the meshes in a time series represented by the mesh sequence data based on the mesh sequence data generated by the sequence generation unit 204 and the multi-viewpoint image data obtained by the image obtaining unit 201. Specifically, the texturing unit 205 assigns textures to the meshes in a time series represented by the mesh sequence data by generating data of meshes with UV coordinates and texture images based on the mesh sequence data and the multi-viewpoint image data. Hereinafter, mesh sequence data that is assigned textures will be referred to as textured mesh sequence data. In other words, the texturing unit 205 generates textured mesh sequence data based on the mesh sequence data and the multi-viewpoint image data. The compression unit 206 compresses the textured mesh sequence data generated by the texturing unit 205 and outputs the textured mesh sequence data after compression as compressed data. <Operation of Image Processing Apparatus>

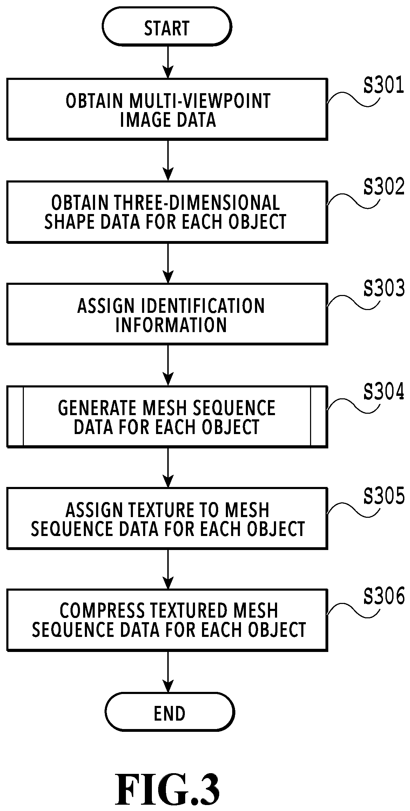

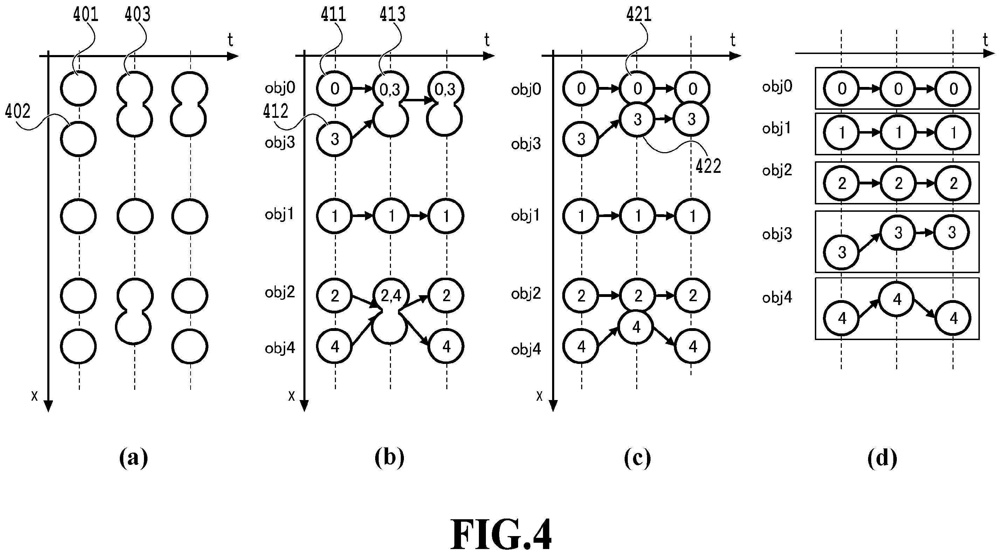

Figure 3 is a flowchart showing an example of a processing flow in the image processing apparatus 100 according to the embodiment 1. Note that in the following description, "S" at the beginning of a sign represents a step (process). In addition, the process of each step shown in the flowchart of Figure 3 is implemented by the CPU 101 reading a predetermined program from the ROM 102, the auxiliary storage device 104, or the like, deploying it to the RAM 103, and executing it. Figure 4 is diagram for illustrating an example of changes in data in the processes from S302 to S305 shown in Figure 3 in the image processing apparatus 100 according to the embodiment 1. Note that in Figure 4, the horizontal axis represents the time t, the vertical axis represents the position x, and each of a plurality of open circles represents the three-dimensional shape of an object estimated by the shape obtaining unit 202.

At first, in S301, the image obtaining unit 201 obtains multi-viewpoint image data, that is, a plurality of pieces of moving image data obtained through synchronized imaging by the plurality of imaging apparatuses. Then, in S302, the shape obtaining unit 202 obtains three-dimensional shape data for each object. Specifically, the three-dimensional shape of each object is estimated using the multi-viewpoint image data obtained in S301, and three-dimensional shape data representing the three-dimensional shape is obtained. More specifically, the shape obtaining unit 202 generates, for each imaging time, three-dimensional shape data for each object corresponding to the imaging time using a plurality of pieces of frame data obtained through synchronized imaging by the plurality of imaging apparatuses to obtain three-dimensional shape sequence data.

This embodiment will provide a description assuming that the shape obtaining unit 202 extracts an area corresponding to an object in each frame constituting each captured image, and estimates the three-dimensional shape of the object based on the area using the visual hull method to obtain three-dimensional shape data. The method of estimating the three-dimensional shape of an object is not limited to the visual hull method. For example, examples of the estimation method include various methods such as a method of estimating a surface point cloud of an object using multi-viewpoint stereo, or a method of estimating a signed distance field around an object using NeuS (Neural implicit surface). In addition, the shape obtaining unit 202 may obtain the three-dimensional shape data externally without estimating the three-dimensional shape of the object. Figure 4 (a) shows an example of three-dimensional shapes in a time series represented by the three-dimensional shape sequence data obtained by the shape obtaining unit 202. Each of shapes 401 and 402 represents the three-dimensional shape of one object that is different from the other, and a shape 403 represents a three-dimensional shape in the state where the two objects are in contact with each other.

After S302, in S303, the identification assigning unit 203 analyzes the three-dimensional shape sequence data obtained in S302 and assigns an object number uniquely corresponding to each object to the three-dimensional shape data at each point in time as identification information. As a method of assigning identification information to three-dimensional shape data, it suffices to use a known method, such as the method disclosed in Japanese Patent Application No. 2021-134886. Figure 4 (b) shows an example of the identification information (object numbers) assigned by the identification assigning unit 203 to the three-dimensional shapes in a time series shown in Figure 4 (a).

As mentioned above, each of the shapes 401 and 402 represents the three-dimensional shape of one object that is different from the other, and the shape 403 represents a three-dimensional shape in a state where the two objects are in contact with each other. Therefore, data of each of the three-dimensional shapes corresponding to the shapes 401 and 402 is assigned an object number corresponding to one object, like shapes 411 and 412. In addition, data of the three-dimensional shape corresponding to the shape 403 is assigned object numbers corresponding to the two respective objects, like a shape 413. Hereinafter, three-dimensional shape data that is assigned one object number will be referred to as single shape information, and three-dimensional shape data that is assigned a plurality of object numbers will be referred to as combined shape information.

After S303, in S304, the sequence generation unit 204 generates mesh sequence data for each object with the same topology. Details of the processing in the sequence generation unit 204 will be described later. Figure 4 (c) shows an example of the mesh sequence data generated by the sequence generation unit 204. As shown in Figure 4 (c), the shape 413 is represented by shapes 421 and 421 that are independent for each object in the mesh sequence data generated by the sequence generation unit 204.

Then, in S305, the texturing unit 205 assigns a texture to the mesh sequence data for each object generated in S304 to generate textured mesh sequence data for each object. For example, the texturing unit 205 generates the textured mesh sequence data by UV unwrapping the surface of each mesh included in the mesh sequence onto a two-dimensional texture image and determining the color of each pixel in the texture image with reference to the captured image. At this time, meshes with the same topology are given the same UV coordinates. In addition, the size of a texture image assigned to each of a plurality of meshes corresponding to the same object is the same.

Then, in S306, the compression unit 206 compresses the textured mesh sequence data for each object generated in S305 to generate compressed data. The generated compressed data is, for example, output to and stored in the auxiliary storage device 104 or the like. The output destination of the compressed data is not limited to the auxiliary storage device 104, but may be output to an external apparatus via the communication I/F 106. Figure 4 (d) shows an example of the textured mesh sequence data for each object generated by the texturing unit 205. The compression unit 206 compresses a series of textured mesh data in the time direction for each object that is surrounded by a solid rectangle in Figure 4 (d).

For example, data of a texture image in each textured mesh data item is compressed based on a moving image compression standard such as H.264. However, the method of compressing data of a texture image is not limited to this, and data of a texture image may be compressed using other codecs such as HEVC or VP9. In addition, the mesh data in each textured mesh data item is compressed using the Draco library or the like. Here, in the compression of mesh data, only one UV coordinate and one piece of topology information are required to be stored within a range with the same topology, and only information indicating the coordinates of the vertices are required to be stored as each mesh data item. To achieve more efficient compression, the compression unit 206 may compress the difference in information between vertices with the same index between meshes in a time series.

However, the method of compressing mesh data is not limited to this, and it is not necessary to use correlation between meshes in a time series in the compression of mesh data. In addition, mesh data may be compressed using other codecs such as MPEG-3DGC. Further, the compression unit 206 may convert each textured mesh data item into colored point cloud data, and compress the converted colored point cloud data using V-PCC (Video-based point cloud compression) standardized by MPEG (Moving Picture Expert Group). After S306, the image processing apparatus 100 ends the processing of the flowchart shown in Figure 3.

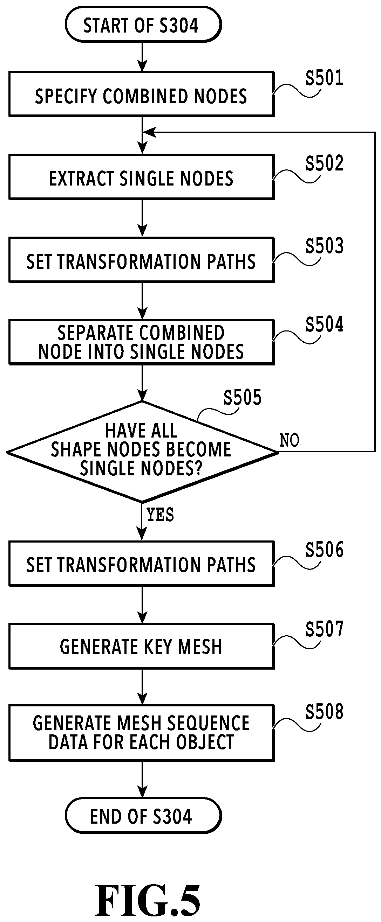

The details of a mesh sequence data generation process in the sequence generation unit 204 will be described with reference to Figures 5 to 7. Figure 5 is a flowchart showing an example of a flow of the mesh sequence data generation process in the sequence generation unit 204 according to the embodiment 1, and is a flowchart showing an example of a detailed process flow in the process of S304 shown in Figure 3. In the mesh sequence data generation process in S304, the sequence generation unit 204 sets a transformation path for separating a three-dimensional shape including the three-dimensional shapes of two or more objects into the three-dimensional shapes of the respective objects based on the identification information.

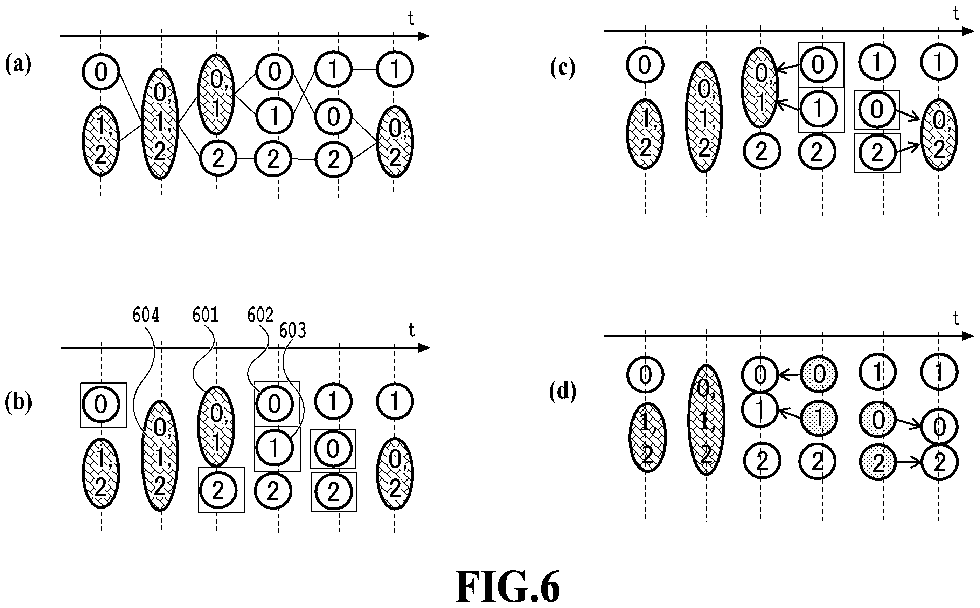

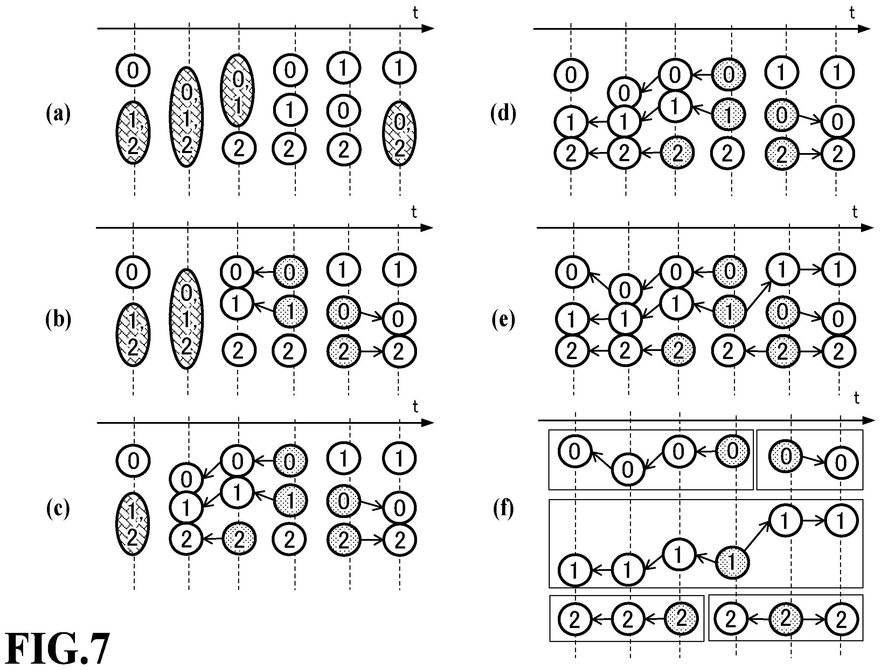

Figures 6 and 7 are diagrams for illustrating a transformation path setting process in the sequence generation unit 204 according to the embodiment 1. The following will provide a description assuming that three-dimensional shapes in time series assigned object numbers are regarded as a graph structure. In a case where the three-dimensional shape of each object is regarded as a node (hereinafter referred to as a "shape node") and shape nodes assigned the same object number are connected by an edge between frames adjacent to each other, a graph structure as shown in Figure 6 (a) is obtained. The sequence generation unit 204 sets transformation paths by analyzing the graph structure as shown in Figure 6 (a).

At first, in S501, the sequence generation unit 204 specifies a shape node corresponding to combined shape information assigned a plurality of object numbers (hereinafter referred to as a "combined node"). Figure 6 shows a combined node using a shaded ellipse. The specifying process in S501 results in a graph shown in Figure 6 (a) as an example. Then, in S502, the sequence generation unit 204 extracts a shape node corresponding to single shape information from shape nodes at the time adjacent to the time of a combined node specified in S501 that are assigned the same object numbers as the combined node. Hereinafter, a shape node corresponding to single shape information will be referred to as a "single node". Figure 6 (b) indicates the extracted single node by surrounding it with a solid rectangle.

Then, in S503, in a case where a combined node specified in S501 may be separated into two or more single nodes by transforming the single nodes in the adjacent frame extracted in S502, the sequence generation unit 204 sets transformation paths from the single nodes to the combined node. For example, in the graph shown in Figure 6 (b) as an example, the combined node 601 may be separated into two single nodes by transforming the single nodes 602 and 603. On the other hand, the combined node 604 do not have two or more single nodes that may be separated by transformation. In Figure 6 (c), an example of transformation paths that are set through the process of S503 performed by the sequence generation unit 204 in the graph shown in Figure 6 (b) is shown using arrows.

Then, in S504, the sequence generation unit 204 separates a combined node for which transformation paths are set in S503 into single nodes of respective objects. Each of the separated single nodes is assigned the object number that was assigned to the combined node and that is the object number of the object corresponding to the single node. In addition, each of the separated single nodes has a transformation path set from the corresponding single node at the adjacent time. Figure 6 (d) shows an example of the state after the combined nodes shown in Figure 6 (c) are separated into and replaced with a plurality of single nodes.

Then, in S505, the sequence generation unit 204 determines whether all shape nodes have become single nodes. If it is determined in S505 that at least some of the shape nodes have not become single nodes, the sequence generation unit 204 repeatedly executes the processes from S502 to S505 until it is determined in S505 that all shape nodes have become single nodes. For example, the shape nodes that are in the state of the graph shown in Figure 7 (a) in the initial state enter the state of the graph shown in Figure 7 (b) as a result of the processes from S502 to S505 being performed for the first time. Furthermore, by repeating the processes from S502 to S505, the state of the graph shown in Figure 7 (b) changes to the states of the graph shown in Figure 7 (c) and 7 (d) in order.

If it is determined in S505 that all shape nodes have become single nodes, the sequence generation unit 204 performs the process of S506. For example, in the state of the graph shown in Figure 7 (d), all shape nodes have become single nodes. In a case where this state has been reached, the sequence generation unit 204 performs the process of S506. In the following description, a shape node that is the starting point of transformation will be referred to as a key node. A key node may be specified by extracting a single node that has no transformation path to itself and has a transformation path from itself.

In S506, the sequence generation unit 204 sets a transformation path for a shape node for which no transformation path has been set in the process of S503. Specifically, the sequence generation unit 204 selects a key node at a time closest to the time of a shape node for which no transformation path has been set, and sets a transformation path from the selected key node to that shape node. As a result of the setting process in S506, all shape nodes have a transformation path set from one of the key nodes as shown in Figure 7 (e).

Then, in S507, the sequence generation unit 204 converts the three-dimensional shape data corresponding to a key node in a series of transformation paths into a mesh to generate data of a mesh corresponding to the key node (hereinafter referred to as a "key mesh"). For example, the sequence generation unit 204 generates the key mesh data by converting the three-dimensional shape data corresponding to the key node into mesh data using the marching cube method.

Then, in S508, the sequence generation unit 204 generates mesh sequence data for each object. Specifically, the sequence generation unit 204 performs non-rigid registration for matching a key mesh to three-dimensional shapes at other times based on key mesh data generated in S507 and a series of transformation paths from the key node corresponding to the key mesh data. Such non-rigid registration enables the sequence generation unit 204 to generate mesh sequence data that is independent for each object. For example, the sequence generation unit 204 aligns a key mesh by regarding three-dimensional shape data represented by voxels as a signed distance field. The method of aligning the key mesh performed by the sequence generation unit 204 is not limited to this, for example, the sequence generation unit 204 may align a key mesh by converting three-dimensional shape data into a surface point cloud. For example, the sequence generation unit 204 may align a key mesh by converting three-dimensional shape data into a mesh in the same way as the key mesh, or may align a key mesh using other data representations.

After the process of S508, the sequence generation unit 204 ends the processes of the flowchart shown in Figure 5, that is, the process of S304. As a result of the process of S304, it is possible to obtain mesh sequence data that is independent for each object and has the same topology intermittently. After the process of S304, the texturing unit 205 generates and assigns data of texture images for each mesh sequence data item with the same topology as shown in Figure 7 (f). In addition, the compression unit 206 compresses textured mesh sequence data for each mesh sequence data item with the same topology. In the following description, the unit of generation of data of texture images and compression of textured mesh sequence data that is delimited by a solid rectangle in Figure 7 (f) will be referred to as a GOM (Group of Models).

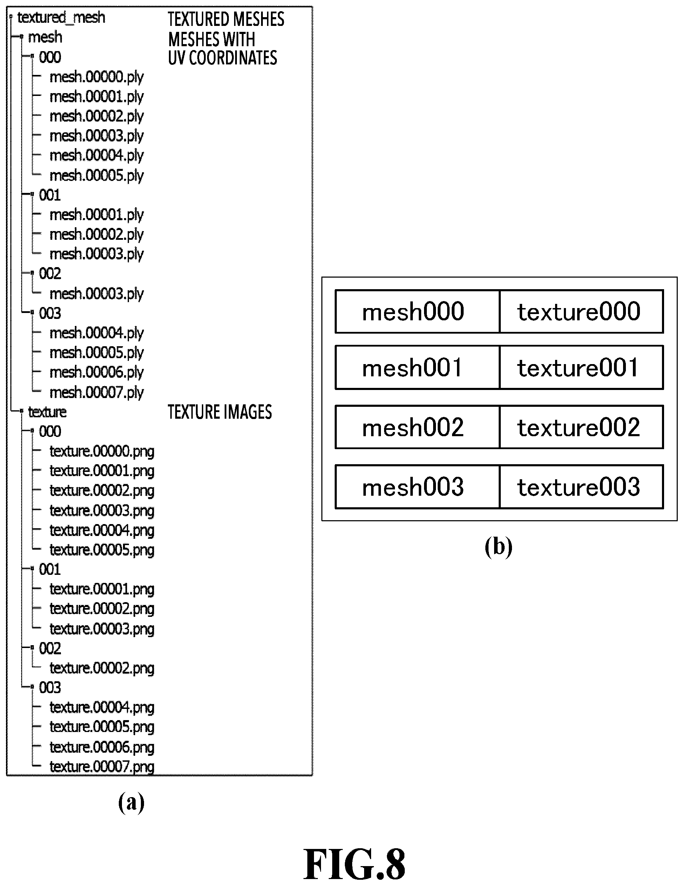

Figure 8 is diagram showing an example of a data structure of textured mesh sequence data output by the texturing unit 205 and a data structure of compressed data output by the compression unit 206 according to the embodiment 1. Figure 8 (a) shows an example of a data structure of textured mesh sequence data output by the texturing unit 205. In the textured mesh sequence data shown in Figure 8 (a) as an example, mesh data with UV coordinates is converted into files in the ply format and texture images (textures) are converted into files in the png format. Figure 8 (b) shows an example of a data structure of compressed data output by the compression unit 206. The compressed data has a structure that allows compressed data to be transmitted for each object individually, like the data structure shown in Figure 8 (b) as an example. According to such a data structure of compressed data, it is possible to transmit compressed data for each object individually, and to decode the transmitted compressed data for each object at the transmission destination.

According to the image processing apparatus 100 configured as described above, it is possible to generate independent textured mesh sequence data for each object. As a result, three-dimensional shape data becomes easy for a user to handle, making it easier for a user to process three-dimensional shape data for each object independently, such as editing three-dimensional shape data for each object. Thus, according to the image processing apparatus 100, it is possible to efficiently compress textured mesh sequence data by compressing textured mesh sequence data for each object, i.e., to improve compression efficiency.

### [Embodiment 2]

The image processing apparatus according to the embodiment 1 generates independent textured mesh sequence data for each object, and compresses the generated textured mesh sequence data for each object individually. An embodiment 2 will describe a form in which data of a point cloud that is colored (hereinafter referred to as a "colored point cloud") is separated for each object and the colored point cloud data for each object after separation is edited and compressed. Note that in the embodiment 2, the description focuses on the differences from the embodiment 1, and the description for similar points is omitted.

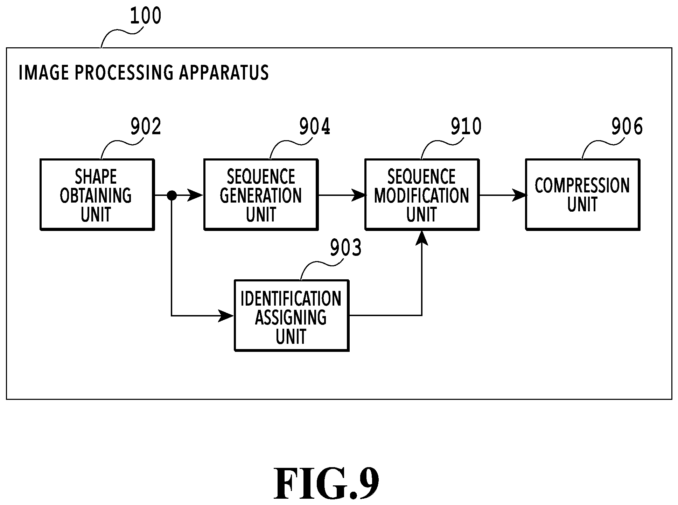

Figure 9 is a block diagram showing an example of a functional configuration of an image processing apparatus 100 according to the embodiment 2 (hereinafter simply referred to as an "image processing apparatus 100"). The image processing apparatus 100 includes a shape obtaining unit 902, an identification assigning unit 903, a sequence generation unit 904, a sequence modification unit 910, and a compression unit 906 as a functional configuration. Since the hardware configuration of the image processing apparatus 100 is the same as that of the image processing apparatus 100 according to the embodiment 1, the description is omitted. Each unit included in the image processing apparatus 100 as a functional configuration is implemented by the CPU 101 reading a predetermined program from the ROM 102, the auxiliary storage device 104, or the like, deploying it to the RAM 103, and executing it.

The shape obtaining unit 902 obtains colored point cloud sequence data composed of colored point cloud data in a time series. The identification assigning unit 903 specifies a point cloud corresponding to each object for each point cloud data item based on information indicating the position and color of each point in each colored point cloud data item that constitutes the colored point cloud sequence data obtained by the shape obtaining unit 902. In addition, the identification assigning unit 903 assigns identification information to data of the specified point cloud corresponding to each object. The method of assigning identification information may be the same method as the embodiment 1. In other words, the identification assigning unit 903 assigns, for example, the data of the point cloud corresponding to each object the object number corresponding to that object as identification information.

The sequence generation unit 904 generates colored point cloud data in a time series that is independent for each object based on information indicating the position and color of each point in the colored point cloud data in a time series obtained by the shape obtaining unit 902 and the identification information assigned by the identification assigning unit 903. In other words, the sequence generation unit 904 generates, for each object, colored point cloud sequence data composed of colored point cloud data in a time series for each object. The sequence modification unit 910 modifies the colored point cloud sequence data for each object according to the user's editing operation, and outputs the modified colored point cloud sequence data to the compression unit 906. The compression unit 906 compresses the colored point cloud sequence data for each object to generate compressed data for each object. The compressed data generated by the compression unit 906 is output to the auxiliary storage device 104 or the like.

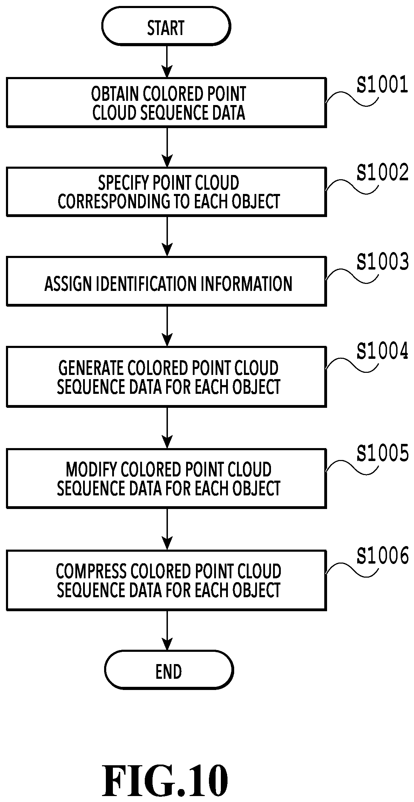

Figure 10 is a flowchart showing an example of a processing flow of the image processing apparatus 100 according to the embodiment 2. Note that the process of each step shown in the flowchart of Figure 10 is implemented by the CPU 101 reading a predetermined program from the ROM 102, the auxiliary storage device 104, or the like, deploying it to the RAM 103, and executing it. First, in S1001, the shape obtaining unit 902 obtains colored point cloud sequence data. Then, in S1002, the identification assigning unit 903 specifies a point cloud corresponding to each object, that is, a colored point cloud corresponding to each object in each of colored point cloud data items in a time series that constitutes the colored point cloud sequence data obtained in S1001. Then, in S1003, the identification assigning unit 903 assigns identification information to the data of the point cloud corresponding to each object specified in S1002.

Then, in S1004, the sequence generation unit 904 generates colored point cloud sequence data for each object based on the colored point cloud sequence data obtained in S1001 and the identification information assigned in S1003. Specifically, the sequence generation unit 904 selects the data of the colored point cloud of any object and aligns the colored point cloud of the selected object with a colored point cloud targeted for alignment. Here, the point cloud targeted for alignment is, for example, the colored point cloud corresponding to the selected object at a time closest to the time of the colored point cloud of that object. For example, the sequence generation unit 904 aligns the colored point cloud of the selected object so that the color and position of each point in the colored point cloud of the selected object after alignment are the same as the color and position of the point in the colored point cloud targeted for alignment. Such alignment enables the sequence generation unit 904 to generate independent colored point cloud sequence data for each object.

Note that color information is assigned to each point in the point cloud data obtained in S1001. Therefore, the sequence generation unit 904 may align the point cloud more accurately than without using color information. Note that it suffices to use the method disclosed in Literature 1 (Marcelo Saval-Calvo, five others, "3D non-rigid registration using color: Color Coherent Point Drift", [online], February 5, 2018, arXiv, [searched on August 23, 2023], Internet <https://arxiv.org/pdf/1802.01516.pdf>) for the alignment of a colored point cloud.

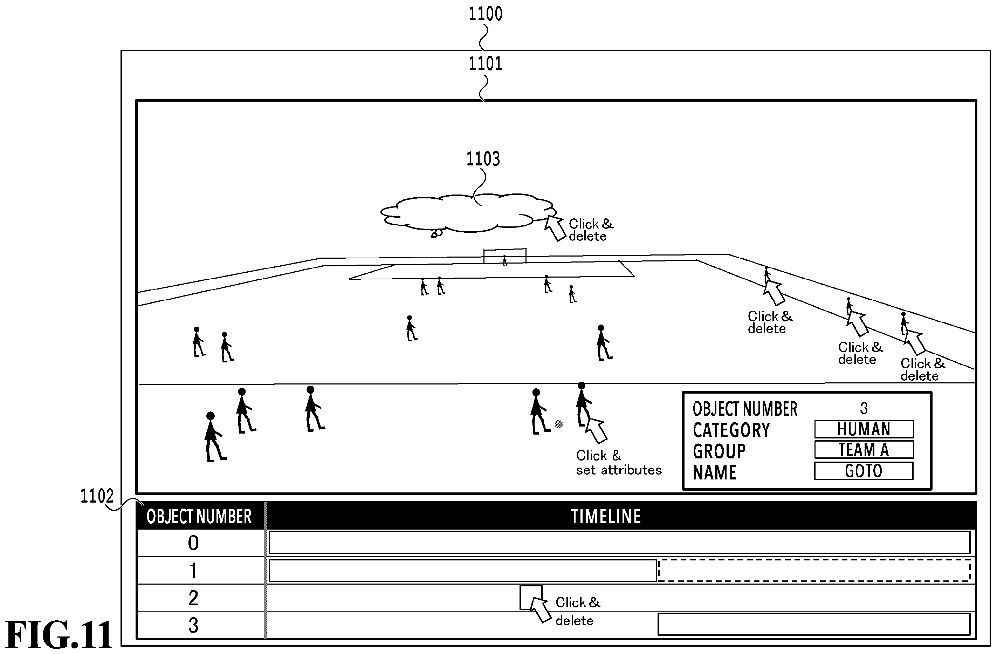

After S1004, in S1005, the sequence modification unit 910 modifies the colored point cloud sequence data for each object generated in S1004 according to the user's editing operation to generate modified colored point cloud sequence data. The generated modified colored point cloud sequence data is output to the compression unit 906. The specific editing operation will be described later using Figure 11. Then, in S1006, the compression unit 906 compresses the modified colored point cloud sequence data for each object generated in S1005 to generate compressed data for each object. The compressed data generated by the compression unit 906 is output to the auxiliary storage device 104 or the like. After S1006, the image processing apparatus 100 ends the processing of the flowchart shown in Figure 10.

To compress the modified colored point cloud sequence data for each object, it suffices to use, for example, G-PCC (Geometry-based Point Cloud Compression) standardized by MPEG. The method of compressing modified colored point cloud sequence data is not limited to methods using G-PCC, and other methods such as V-PCC may be used to compress the modified colored point cloud sequence data. The compression unit 906 may compress the modified colored point cloud sequence data by using a method using three-dimensional temporal correlation as follows. Specifically, for example, the compression unit 906 first compresses the point cloud data corresponding to a key node in the modified colored point cloud sequence data using the Draco library. Subsequently, the compression unit 906 compresses the differences of information indicating the coordinates and colors in the point cloud data in GOM including the key node.

### <User's Editing Operations>

Figure 11 is a diagram showing an example of an editing UI (user interface) 1100 for receiving operations for editing colored point cloud sequence data performed by the user according to the embodiment 2. The editing UI has areas 1101 and 1102. The area 1101 is a screen area where colored point cloud for each object in a scene at any point in time is drawn. The area 1102 is a screen area where a point cloud sequence managed for each object is drawn using a timeline. By operating a seek bar on the timeline, the user may cause a colored point cloud at a desired point in time to be drawn in the area 1101.

A shape 1103 represents three-dimensional shape data that is generated incorrectly in a case of estimating the shape of an object with an object number of 2. For example, the user may delete unnecessary three-dimensional shape data, such as the shape 1103, by selecting it on the editing UI 1100. Specifically, for example, the user instructs the image processing apparatus 100 to delete the three-dimensional shape data corresponding to the shape 1103 by selecting the shape 1103 in the area 1101 through an input operation using a mouse or the like and then pressing a delete button not shown in Figure 11. Note that the operations of selecting and deleting the shape 1103 may also be performed on the timeline drawn in the area 1102. In this case, for example, the user may delete the three-dimensional shape data corresponding to the shape 1103 by selecting the bar with the object number of 2 in the timeline and then pressing a delete button not shown in Figure 11.

In addition, on the editing UI 1100, the user may set attribute information for an object corresponding to a three-dimensional shape drawn on the editing UI 1100. Specifically, the user selects a three-dimensional shape or object number corresponding to a desired object on the editing UI1100, and sets a category, a group, a name, or the like of that object. The category is information that represents the type of the object, such as a human or a thing. The group is information that represents the affiliation or the like of the object, for example, information that may further classify the type of the object that is set to the category. For example, in a case where the imaging target is a team sport such as soccer, the name or the like of the team to which the object belongs may be set as the group. The name is information that allows people to identify the object, such as a unique name of the object. For example, in a case where the category of the object is human, the name is set to the full name of the object. In addition, for example, in a case where the imaging target is a team sport such as soccer, the uniform number or the like of the player who is the object may be set as the name.

According to the image processing apparatus 100 configured as described above, it is possible to generate independent point cloud sequence data for each object from point cloud sequence data. Thus, according to the image processing apparatus 100, it is possible to efficiently compress point cloud sequence data by compressing point cloud sequence data for each object. In addition, according to the image processing apparatus 100 configured as described above, it is possible to edit volumetric video represented by point cloud sequence data for each object and compress and output the edited point cloud sequence data.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)*)*^{™}, a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

### [Configurations of the Present Disclosure]

The present disclosure includes the following configurations, methods, and programs.

### <Configuration 1>

An image processing apparatus comprising:
a shape obtaining unit configured to obtain three-dimensional shape sequence data including one or more three-dimensional shape data items in a time series representing three-dimensional shapes of a plurality of objects;
a separation unit configured to, in a case where a data item of a combined shape in which three-dimensional shapes of two or more objects of the plurality of objects are combined as one three-dimensional shape is included in the one or more three-dimensional shape data items in the time series, separate the data item of the combined shape into object shape data items which are three-dimensional shape data items corresponding to the two or more respective objects to generate the object shape data items corresponding to each of the plurality of objects;
a sequence generation unit configured to generate, for each object, object shape sequence data which is three-dimensional shape sequence data including the object shape data items in a time series for each object; and
a compression unit configured to compress the object shape sequence data for each object.

### <Configuration 2>

The image processing apparatus according to configuration 1, wherein
the separation unit separates the data item of the combined shape into the object shape data items corresponding to the two or more respective objects by transforming data items of single shapes which are three-dimensional shapes of the two or more objects not combined with each other among three-dimensional shape data items adjacent to a three-dimensional shape data item including the data item of the combined shape in the time series.

### <Configuration 3>

The image processing apparatus according to configuration 1 or 2, wherein
the three-dimensional shape sequence data is colored point cloud sequence data including one or more colored point cloud data items in a time series corresponding to surfaces of the plurality of objects as the one or more three-dimensional shape data items in the time series,
the separation unit separates the one or more colored point cloud data items into one or more colored object point cloud data items corresponding to each of the plurality of objects by transforming the one or more colored point cloud data items based on information indicating a position of each point in the one or more colored point cloud data items in the time series, and
the sequence generation unit generates, for each object, colored object point cloud sequence data including the one or more colored object point cloud data items in a time series corresponding to each of the plurality of objects as the three-dimensional shape sequence data based on the one or more colored object point cloud data items with an identical number of points.

### <Configuration 4>

The image processing apparatus according to configuration 3, wherein
the separation unit separates the one or more colored point cloud data items into the one or more colored object point cloud data items corresponding to each of the plurality of objects by transforming the one or more colored point cloud data items based on information indicating a position of each point and information indicating a color of each point in the one or more colored point cloud data items in the time series.

### <Configuration 5>

The image processing apparatus according to configuration 1 or 2, wherein
the three-dimensional shape sequence data is textured mesh sequence data including one or more textured mesh data items in a time series representing surface shapes of the plurality of objects as the one or more three-dimensional shape data items in the time series,
the separation unit separates the one or more textured mesh data items into one or more textured object mesh data items corresponding to each of the plurality of objects by transforming the one or more textured mesh data items based on information indicating a position of each vertex in the one or more textured mesh data items in the time series, and
the sequence generation unit generates, for each object, textured object mesh sequence data including the one or more textured object mesh data items in a time series corresponding to each of the plurality of objects as the three-dimensional shape sequence data based on the one or more textured object mesh data items with an identical topology.

### <Configuration 6>

The image processing apparatus according to any one of configurations 1 to 5, further comprising
an image obtaining unit configured to obtain captured image data obtained by capturing images of the plurality of objects,
wherein the shape obtaining unit obtains the three-dimensional shape sequence data by estimating the three-dimensional shape sequence data using the obtained captured image data.

### <Configuration 7>

The image processing apparatus according to configuration 6, wherein
the shape obtaining unit assigns color information to the three-dimensional shape sequence data using the captured image data.

### <Configuration 8>

The image processing apparatus according to any one of configurations 1 to 7, further comprising
an identification assigning unit configured to assign, to each of the one or more three-dimensional shape data items in the time series included in the three-dimensional shape sequence data, identification information of a corresponding one of the plurality of objects.

### <Configuration 9>

The image processing apparatus according to configuration 8, wherein
the sequence generation unit generates the object shape sequence data for each object based on the assigned identification information.

### <Configuration 10>

The image processing apparatus according to configuration 8 or 9, wherein
the separation unit separates the data item of the combined shape into the object shape data items corresponding to the two or more respective objects based on the assigned identification information.

### <Configuration 11>

The image processing apparatus according to any one of configurations 8 to 10, wherein
the separation unit comprises a transformation path setting unit configured to set a starting point shape data item that is a starting point for transforming one or more three-dimensional shape data items among the one or more three-dimensional shape data items in the time series and a transformation path for transforming one or more three-dimensional shape data items based on the assigned identification information, and a transformation unit configured to transform one or more three-dimensional shape data items in chronological order from the starting point shape data item according to the transformation path based on the starting point three-dimensional shape data item and the transformation path.

### <Configuration 12>

The image processing apparatus according to configuration 11, wherein
in a case where the identification information assigned to the data item of the combined shape includes the identification information assigned to each of data items of single shapes which are three-dimensional shapes of the two or more objects not combined with each other and which are adjacent in the time series, the separation unit sets the transformation path from each of the data items of the single shapes to the data item of the combined shape.

### <Configuration 13>

The image processing apparatus according to any one of configurations 1 to 12, further comprising
a compression unit configured to compress the object shape sequence data for each object.

### <Configuration 14>

The image processing apparatus according to configuration 13, wherein
the compression unit compresses the object shape sequence data for each range with an identical starting point object shape data item which is a starting point for transforming the object shape data items.

### <Configuration 15>

The image processing apparatus according to configuration 13 or 14, further comprising:
a reception unit configured to receive an editing operation for the object shape sequence data; and
a sequence modification unit configured to modify the object shape sequence data based on the editing operation to generate modified object shape sequence data,
wherein for the object shape sequence data for which the modified object shape sequence data has been generated, the compression unit compresses the modified object shape sequence data in place of the object shape sequence data.

### <Method>

An image processing method comprising:
a shape obtaining step of obtaining three-dimensional shape sequence data including one or more three-dimensional shape data items in a time series representing three-dimensional shapes of a plurality of objects;
a separation step of, in a case where a data item of a combined shape in which three-dimensional shapes of two or more objects of the plurality of objects are combined as one three-dimensional shape is included in the one or more three-dimensional shape data items in the time series, separating the data item of the combined shape into object shape data items which are three-dimensional shape data items corresponding to the two or more respective objects to generate the object shape data items corresponding to each of the plurality of objects; and
a sequence generation step of generating, for each object, object shape sequence data which is three-dimensional shape sequence data including the object shape data items in a time series for each object.

### <Program>

A program for causing a computer to function as the image processing apparatus according to any one of configurations 1 to 15.

The present invention is not intended to be limited to the above-described embodiments, and various changes and modifications are possible without departing from the spirit and scope of the present invention. Accordingly, the following claims are appended to disclose the scope of the present invention.

This application claims the priority to Japanese Patent Application No. 2023-150880, filed September19, 2023, and the entire disclosure of the above application is incorporated herein.

## Claims

1. An image processing apparatus comprising:
a shape obtaining unit configured to obtain three-dimensional shape sequence data including one or more three-dimensional shape data items in a time series representing three-dimensional shapes of a plurality of objects;
a separation unit configured to, in a case where a data item of a combined shape in which three-dimensional shapes of two or more objects of the plurality of objects are combined as one three-dimensional shape is included in the one or more three-dimensional shape data items in the time series, separate the data item of the combined shape into object shape data items which are three-dimensional shape data items corresponding to the two or more respective objects to generate the object shape data items corresponding to each of the plurality of objects; and
a sequence generation unit configured to generate, for each object, object shape sequence data which is three-dimensional shape sequence data including the object shape data items in a time series for each object.

2. The image processing apparatus according to claim 1, wherein
the separation unit separates the data item of the combined shape into the object shape data items corresponding to the two or more respective objects by transforming data items of single shapes which are three-dimensional shapes of the two or more objects not combined with each other among three-dimensional shape data items adjacent to a three-dimensional shape data item including the data item of the combined shape in the time series.

3. The image processing apparatus according to claim 1, wherein
the three-dimensional shape sequence data is colored point cloud sequence data including one or more colored point cloud data items in a time series corresponding to surfaces of the plurality of objects as the one or more three-dimensional shape data items in the time series,
the separation unit separates the one or more colored point cloud data items into one or more colored object point cloud data items corresponding to each of the plurality of objects by transforming the one or more colored point cloud data items based on information indicating a position of each point in the one or more colored point cloud data items in the time series, and
the sequence generation unit generates, for each object, colored object point cloud sequence data including the one or more colored object point cloud data items in a time series corresponding to each of the plurality of objects as the three-dimensional shape sequence data based on the one or more colored object point cloud data items with an identical number of points.

4. The image processing apparatus according to claim 3, wherein
the separation unit separates the one or more colored point cloud data items into the one or more colored object point cloud data items corresponding to each of the plurality of objects by transforming the one or more colored point cloud data items based on information indicating a position of each point and information indicating a color of each point in the one or more colored point cloud data items in the time series.

5. The image processing apparatus according to claim 1, wherein
the three-dimensional shape sequence data is textured mesh sequence data including one or more textured mesh data items in a time series representing surface shapes of the plurality of objects as the one or more three-dimensional shape data items in the time series,
the separation unit separates the one or more textured mesh data items into one or more textured object mesh data items corresponding to each of the plurality of objects by transforming the one or more textured mesh data items based on information indicating a position of each vertex in the one or more textured mesh data items in the time series, and
the sequence generation unit generates, for each object, textured object mesh sequence data including the one or more textured object mesh data items in a time series corresponding to each of the plurality of objects as the three-dimensional shape sequence data based on the one or more textured object mesh data items with an identical topology.

6. The image processing apparatus according to claim 1, further comprising
an image obtaining unit configured to obtain captured image data obtained by capturing images of the plurality of objects,
wherein the shape obtaining unit obtains the three-dimensional shape sequence data by estimating the three-dimensional shape sequence data using the obtained captured image data.

7. The image processing apparatus according to claim 6, wherein
the shape obtaining unit assigns color information to the three-dimensional shape sequence data using the captured image data.

8. The image processing apparatus according to claim 1, further comprising
an identification assigning unit configured to assign, to each of the one or more three-dimensional shape data items in the time series included in the three-dimensional shape sequence data, identification information of a corresponding one of the plurality of objects.

9. The image processing apparatus according to claim 8, wherein
the sequence generation unit generates the object shape sequence data for each object based on the assigned identification information.

10. The image processing apparatus according to claim 8, wherein
the separation unit separates the data item of the combined shape into the object shape data items corresponding to the two or more respective objects based on the assigned identification information.

11. The image processing apparatus according to claim 8, wherein
the separation unit comprises a transformation path setting unit configured to set a starting point shape data item that is a starting point for transforming one or more three-dimensional shape data items among the one or more three-dimensional shape data items in the time series and a transformation path for transforming one or more three-dimensional shape data items based on the assigned identification information, and a transformation unit configured to transform one or more three-dimensional shape data items in chronological order from the starting point shape data item according to the transformation path based on the starting point three-dimensional shape data item and the transformation path.

12. The image processing apparatus according to claim 11, wherein
in a case where the identification information assigned to the data item of the combined shape includes the identification information assigned to each of data items of single shapes which are three-dimensional shapes of the two or more objects not combined with each other and which are adjacent in the time series, the separation unit sets the transformation path from each of the data items of the single shapes to the data item of the combined shape.

13. The image processing apparatus according to claim 1, further comprising
a compression unit configured to compress the object shape sequence data for each object.

14. The image processing apparatus according to claim 13, wherein
the compression unit compresses the object shape sequence data for each range with an identical starting point object shape data item which is a starting point for transforming the object shape data items.

15. The image processing apparatus according to claim 13, further comprising:
a reception unit configured to receive an editing operation for the object shape sequence data; and
a sequence modification unit configured to modify the object shape sequence data based on the editing operation to generate modified object shape sequence data,
wherein for the object shape sequence data for which the modified object shape sequence data has been generated, the compression unit compresses the modified object shape sequence data in place of the object shape sequence data.

16. An image processing method comprising:
a shape obtaining step of obtaining three-dimensional shape sequence data including one or more three-dimensional shape data items in a time series representing three-dimensional shapes of a plurality of objects;
a separation step of, in a case where a data item of a combined shape in which three-dimensional shapes of two or more objects of the plurality of objects are combined as one three-dimensional shape is included in the one or more three-dimensional shape data items in the time series, separating the data item of the combined shape into object shape data items which are three-dimensional shape data items corresponding to the two or more respective objects to generate the object shape data items corresponding to each of the plurality of objects; and
a sequence generation step of generating, for each object, object shape sequence data which is three-dimensional shape sequence data including the object shape data items in a time series for each object.

17. A program for causing a computer to function as the image processing apparatus according to any one of claims 1 to 15.
